# EUROPÄISCHE PATENTSCHRIFT

(11) **EP 3 072 390 B1**
(45) Veröffentlichungstag und Bekanntmachung des Hinweises auf die Patenterteilung: **23.08.2017**
(21) Anmeldenummer: 15161091.2
(22) Anmeldetag: 26.03.2015
(51) Int. Cl.: A01J 7/02, A01J 5/04

(54) **MELKANLAGE UND MELKVERFAHREN**
MILKING APPARATUS AND MILKING METHOD
INSTALLATION DE TRAITE ET PROCÉDÉ DE TRAITE

(43) Veröffentlichungstag der Anmeldung: 28.09.2016
(73) Patentinhaber: Sterling Industry Consult GmbH, 25524 Itzehoe (DE)
(72) Erfinder: Kösters, Heiner, 25524 Itzehoe (DE); Schütze, Daniel, 25524 Itzehoe (DE); Groth, Torge, 25524 Itzehoe (DE)
(74) Vertreter: Glawe, Delfs, Moll

(56) Entgegenhaltungen:
- DE-U1- 29 507 467
- DE-U1- 29 710 303
- US-A- 5 275 124

## Beschreibung

Die Erfindung betrifft eine Melkanlage, die einen Milchtank und eine Mehrzahl von an den Milchtank angeschlossenen Zitzenbechern umfasst. Die Melkanlage umfasst einen Spülanschluss zum Einleiten einer Spülflüssigkeit in die Melkanlage und eine Flüssigkeitsring-Vakuumpumpe zum Anlegen eines Unterdrucks an den Zitzenbecher. Die Erfindung betrifft außerdem ein Melkverfahren.

In solchen Melkanlagen dient der Unterdruck in den Zitzenbechern dazu, die Milch aus den Zitzen einer Kuh anzusaugen. Die Milch wird in den Milchtank geleitet und kann von dort der weiteren Verarbeitung zugeführt werden.

Zur Aufrechterhaltung der Hygiene werden die Melkanlagen regelmäßig gespült. Durch den Flüssigkeitsanschluss wird eine Spülflüssigkeit in die Melkanlage eingeleitet. Die Spülflüssigkeit fließt durch die Komponenten der Melkanlage hindurch und führt Verunreinigungen mit sich. Nachdem die Spülflüssigkeit wieder aus der Melkanlage entfernt ist, kann die Melkanlage erneut zum Melken verwendet werden. Es handelt sich um ein sogenanntes Cleaning in Place (CIP), bei dem die Melkanlage zum Spülen nicht zerlegt wird.

Zum Erzeugen des Unterdrucks umfasst die Melkanlage eine Vakuumpumpe, die als Flüssigkeitsring-Vakuumpumpe ausgebildet ist. Flüssigkeitsring-Vakuumpumpen sind geeignet, den für die Melkanlage erforderlichen Unterdruck zu erzeugen. Flüssigkeitsring-Vakuumpumpen benötigen eine Betriebsflüssigkeit, um den Flüssigkeitsring bilden zu können, siehe z.B. DE 295 07 467 U. Um Wärme aus der Pumpe abzuführen und eine Überhitzung zu vermeiden, werden Flüssigkeitsring-Vakuumpumpen üblicherweise so betrieben, dass die Betriebsflüssigkeit laufend ausgetauscht wird. Der Verbrauch an Betriebsflüssigkeit ist dann beträchtlich.

Der Erfindung liegt die Aufgabe zugrunde, eine Melkanlage und ein Melkverfahren vorzustellen, bei denen der Ressourcenverbrauch vermindert ist. Ausgehend vom genannten Stand der Technik wird die Aufgabe gelöst mit den Merkmalen des Anspruchs 1. Vorteilhafte Ausführungsformen sind in den Unteransprüchen angegeben.

Erfindungsgemäß umfasst die Melkanlage einen Pufferbehälter für eine Betriebsflüssigkeit der Flüssigkeitsring-Vakuumpumpe. Ein Spülkanal erstreckt sich von dem Spülanschluss bis zu dem Pufferbehälter.

Durch den erfindungsgemäßen Spülkanal wird es möglich, die Spülflüssigkeit, die für den Betrieb der Melkanlage ohnehin erforderlich ist, ein weiteres Mal zu nutzen, und zwar als Betriebsflüssigkeit für die Flüssigkeitsring-Vakuumpumpe. Frische Betriebsflüssigkeit wird nicht oder nur in geringerer Menge verbraucht.

Die Melkanlage umfasst vorzugsweise eine Betriebsflüssigkeitsleitung, die sich von dem Pufferbehälter bis zu der Flüssigkeitsring-Vakuumpumpe erstreckt. Vorzugsweise erstreckt sich die Betriebsflüssigkeitsleitung zu einem Saugabschnitt der Flüssigkeitsring-Vakuumpumpe. Dadurch wird es möglich, dass die Flüssigkeitsring-Vakuumpumpe im Betrieb selbsttätig Betriebsflüssigkeit aus dem Pufferbehälter ansaugen kann. Die Betriebsflüssigkeitsleitung kann direkt in dem Gehäuse der Flüssigkeitsring-Vakuumpumpe münden und von dort zu dem Saugabschnitt der Pumpe weitergeführt werden. Ebenso ist es möglich, dass die Betriebsflüssigkeitsleitung in einer Saugleitung mündet, die an den Saugabschnitt der Pumpe angeschlossen ist.

Wird im Betrieb der Flüssigkeitsring-Vakuumpumpe weitere Betriebsflüssigkeit angesaugt, so tritt auf der Ausgangsseite der Pumpe überschüssige Betriebsflüssigkeit aus. Es ist möglich, die überschüssige Betriebsflüssigkeit über einen Abfluss zu entsorgen. In einer bevorzugten Ausführungsform erstreckt sich eine Auslassleitung von der Ausgangsseite der Pumpe bis zu dem Pufferbehälter. Dadurch wird es möglich, die Betriebsflüssigkeit in einem Kreislauf zu führen.

Mit der überschüssigen Betriebsflüssigkeit wird Betriebswärme aus der Flüssigkeitsring-Vakuumpumpe abgeführt. Die überschüssige Betriebsflüssigkeit ist wärmer als die Betriebsflüssigkeit, die aus dem Pufferbehälter nachgeführt wird. Wird die Betriebsflüssigkeit im Kreis geführt, so erwärmt sich die Flüssigkeit in dem Pufferbehälter mit dem Betrieb der Pumpe. Ist der Siedepunkt der Flüssigkeit erreicht, beginnt die Flüssigkeit zu verdampfen, sodass die Temperatur nicht weiter ansteigt. Der Pufferbehälter kann mit einem Dampfauslass versehen sein, durch den der Dampf austreten kann.

Im Melkbetrieb saugt die Flüssigkeitsring-Vakuumpumpe Gas aus den Komponenten der Melkanlage an. Das geförderte Gas kann zusammen mit der überschüssigen Betriebsflüssigkeit durch die Auslassleitung der Flüssigkeitsring-Vakuumpumpe austreten. Wenn die Auslassleitung zu dem Pufferbehälter geführt wird, kann der Pufferbehälter zugleich als Abscheider für die Flüssigkeit wirken. Die Flüssigkeit kann sich in dem Pufferbehälter sammeln, während das Gas nach außen abgeführt wird.

Die Melkanlage umfasst vorzugsweise eine Saugleitung, die sich von der Eingangsseite der Flüssigkeitsring-Vakuumpumpe bis zu den Zitzenbechern erstreckt. In der Saugleitung kann ein Pulsator angeordnet sein, sodass an den Zitzenbechern ein pulsierender Unterdruck anliegt und die Kuh wirksam gemolken wird. Die Melkanlage kann eine mehrere, insbesondere wenigstens vier Zitzenbecher umfassende Melkstation aufweisen. An der Melkstation können mehrere Zitzen der Kuh gleichzeitig gemolken werden. Die Melkanlage kann auch eine Mehrzahl von Melkstationen aufweisen, die jeweils mehrere Zitzenbecher umfassen. Mit einer solchen Melkanlage können mehrere Kühe gleichzeitig gemolken werden. Die Flüssigkeitsring-Vakuumpumpe ist vorzugsweise so ausgelegt, dass sie an alle Zitzenbecher der Melkanlage gleichzeitig Unterdruck anlegen kann.

An den Zitzenbecher kann außerdem eine Milchleitung angeschlossen sein, die sich von dem Zitzenbecher bis zu dem Milchtank erstreckt. Durch die Milchleitung wird die Milch in den Milchtank geführt und dort gesammelt. In einer bevorzugten Ausführungsform ist auch der Milchtank über eine Saugleitung an die Eingangsseite der Flüssigkeitsring-Vakuumpumpe angeschlossen.

Über den Spülanschluss kann eine Spülflüssigkeit in die Melkanlage eingeleitet werden. Der Spülanschluss kann an einer beliebigen Komponente der Melkanlage angeordnet sein, beispielsweise an dem Zitzenbecher, an dem Milchtank, an einer Saugleitung, an einer Milchleitung. Die Melkanlage ist vorzugsweise so gestaltet, dass der Spülkanal sich von dem Spülanschluss zu allen Komponenten der Melkanlage erstreckt, die gespült werden sollen. Möglich ist auch, dass die Melkanlage eine Mehrzahl von Spülanschlüssen umfasst, um die Spülflüssigkeit zu allen zu spülenden Komponenten zu leiten. Zu den Komponenten der Melkanlage, die mit der Spülflüssigkeit gespült werden, können die Saugleitung, die Milchleitung, der Milchtank und/oder die Zitzenbecher gehören.

Die Melkanlage kann eine oder mehrere Spülleitungen umfassen, die im Melkbetrieb nicht genutzt werden und die nur zum Durchleiten der Spülflüssigkeit dienen. Regelmäßig erstreckt der erfindungsgemäße Spülkanal sich wenigstens abschnittsweise durch Leitungen, die auch im Melkbetrieb genutzt werden, beispielsweise durch eine zum Erzeugen des Unterdrucks genutzte Saugleitung und/oder durch eine zum Durchleiten der Milch genutzte Milchleitung.

Der Spülkanal kann so gestaltet sein, dass die gesamte Menge an eingeleiteter Spülflüssigkeit zu dem Pufferbehälter geführt wird. Der Pufferbehälter kann einen Überlauf aufweisen, durch den überschüssige Flüssigkeit abgegeben werden kann, falls mehr Spülflüssigkeit zugeführt wird, als der Pufferbehälter fassen kann. Der Pufferbehälter kann einen Anschluss an einen Flüssigkeitsvorrat aufweisen, um Flüssigkeit zuführen zu können, falls die zugeführte Spülflüssigkeit nicht ausreicht, um die Flüssigkeitsring-Vakuumpumpe betreiben zu können. Insbesondere kann es sich um einen Frischwasseranschluss handeln. Der Anschluss kann durch ein Schwimmerventil gesteuert sein, sodass der Anschluss automatisch geöffnet wird, wenn der Flüssigkeitsstand in dem Pufferbehälter unter einen vorgegebenen Pegel singt, und dass der Anschluss automatisch schließt, sobald der Pegel erreicht wird.

Der Spülkanal kann sich durch die Flüssigkeitsring-Vakuumpumpe hindurch erstrecken. Die Spülflüssigkeit kann durch die Saugleitung in die Pumpe eintreten. Von dort kann die Spülflüssigkeit sich durch die Betriebsflüssigkeitsleitung und/oder durch die Auslassleitung weiter bis zum Pufferbehälter bewegen. Bei dieser Ausführungsform sind die Komponenten der Pumpe, die mit der Spülflüssigkeit in Kontakt kommen, vorzugsweise aus einem korrosionsfesten Material gefertigt. Insbesondere kann es sich um korrosionsfestes Metall, beispielsweise Edelstahl handeln. Damit wird verhindert, dass die Flüssigkeitsring-Vakuumpumpe Schaden nimmt, wenn die Spülflüssigkeit aggressive Bestandteile enthält, wie beispielsweise alkalische oder säurehaltige Mittel.

Zusätzlich oder alternativ dazu kann die Melkanlage einen Spülkanal umfassen, der an der Pumpe vorbei geführt ist. Der Spülkanal kann sich durch eine Leitung erstrecken, die unter Umgehung der Pumpe in dem Pufferbehälter mündet.

Um einen direkten Kontakt zwischen der Spülflüssigkeit und der Flüssigkeitsring-Vakuumpumpe zu vermeiden, ist es insbesondere möglich, dass der Kühlkanal insgesamt an der Flüssigkeitsring-Vakuumpumpe vorbeigeführt wird. Zu diesem Zweck kann die Saugleitung, die an die Eingangsseite der Pumpe angeschlossen ist, mit einem Ventil verschließbar sein. Die mit der Betriebsflüssigkeit in Berührung kommenden Komponenten der Pumpe können dann aus einem nicht-korrosionsbeständigen Material gefertigt sein, wie beispielsweise Grauguss. Die aggressiven Bestandteile der Spülflüssigkeit sollten ausreichend verdünnt sein, bevor sie von dem Pufferbehälter als Betriebsflüssigkeit in die Pumpe geleitet werden. Die erforderliche Verdünnung ergibt sich üblicherweise schon daraus, dass die Melkanlage zum Abschluss eines Spülvorgangs mit reinem Wasser gespült wird.

Die Melkanlage kann außerdem eine Steuerung umfassen, die dazu ausgelegt ist, die Flüssigkeitsring-Vakuumpumpe und/oder den Spülanschluss anzusteuern. Die Steuerung kann so eingerichtet sein, dass sie im Melkbetrieb die Flüssigkeitsring-Vakuumpumpe in Betrieb setzt und im Spülbetrieb die Flüssigkeitsring-Vakuumpumpe außer Betrieb setzt. Die Steuerung kann so eingerichtet sein, dass sie den Spülanschluss im Melkbetrieb schließt und dass sie den Spülanschluss im Spülbetrieb öffnet. Die Steuerung kann ferner so ausgelegt sein, dass sie im Spülbetrieb eine Folge unterschiedlicher Spülflüssigkeiten in die Melkanlage einleitet. Darunter können Spülflüssigkeiten mit alkalischen Bestandteilen und Spülflüssigkeiten mit sauren Bestandteilen sein. Vorzugsweise wird zum Abschluss des Spülbetriebs eine neutrale Flüssigkeit, insbesondere reines Wasser in die Melkanlage eingeleitet.

Wird die Spülflüssigkeit unter Umgehung der Flüssigkeitsring-Vakuumpumpe zu dem Pufferbehälter geleitet, so kann in dem zu dem Pufferbehälter führenden Abschnitt des Spülkanals ein Ventil vorgesehen sein. Die Steuerung kann dazu ausgelegt sein, dass Ventil im Spülbetrieb zu öffnen und das Ventil im Melkbetrieb zu schließen.

Die Erfindung betrifft außerdem ein Melkverfahren gemäß Anspruch 14, bei dem in einem Melkbetrieb mit einer Flüssigkeitsring-Vakuumpumpe ein Unterdruck an einen Zitzenbecher angelegt wird, um Milch in einen Milchtank zu leiten, wobei der Flüssigkeitsring-Vakuumpumpe eine Betriebsflüssigkeit aus einem Pufferbehälter zugeführt wird. In einem Spülbetrieb wird eine Spülflüssigkeit in die Melkanlage eingeleitet, um den Zitzenbecher zu spülen, wobei die Spülflüssigkeit durch einen Spülkanal in den Pufferbehälter geleitet wird.

Der Spülbetrieb umfasst vorzugsweise einen Spülschritt, in dem die Spülflüssigkeit alkalische Bestandteile enthält und/oder einen Spülschritt, in dem die Spülflüssigkeit saure Bestandteile enthält. Im letzten Spülschritt wird vorzugsweise eine neutrale Spülflüssigkeit, insbesondere reines Wasser in die Melkanlage eingeleitet. Die Flüssigkeitsring-Vakuumpumpe kann während des Spülbetriebs außer Betrieb sein.

Das Melkverfahren kann mit weiteren Merkmalen fortgebildet werden, die im Zusammenhang der erfindungsgemäßen Melkanlage beschrieben sind. Die Melkanlage kann mit weiteren Merkmalen fortgebildet werden, die im Zusammenhang des erfindungsgemäßen Melkverfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer erfindungsgemäßen Melkanlage;
- Fig. 2:: die Ansicht aus Fig. 1 bei einer alternativen Ausführungsform der Erfindung;
- Fig. 3:: eine schematische Darstellung einer erfindungsgemäßen Melkanlage; und
- Fig. 4:: die Ansicht aus Fig. 3 bei einer alternativen Ausführungsform der Erfindung.

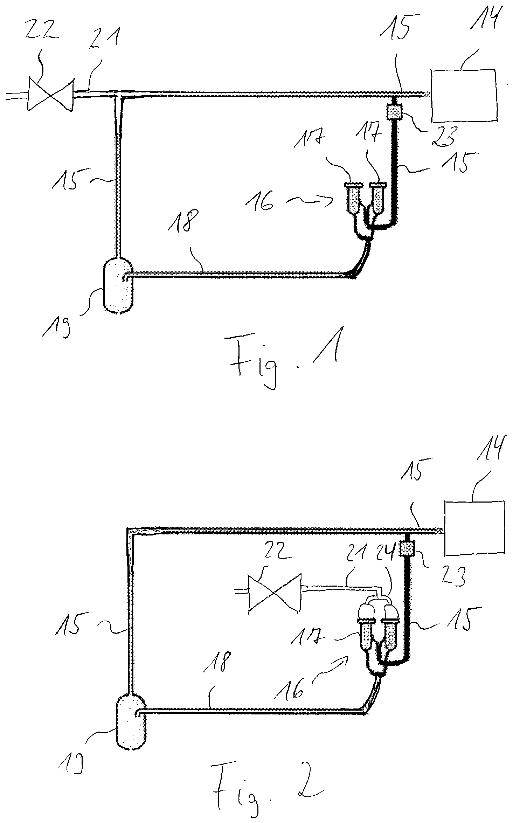

Bei der in Fig. 1 gezeigten Melkanlage ist ein nur schematisch dargestelltes Pumpensystem 14 über eine Saugleitung 15 an eine Melkstation 16 angeschlossen. Die Melkstation 16 umfasst eine Mehrzahl von Zitzenbechern 17, von der in Fig. 1 zwei dargestellt sind. An die Melkstation 16 ist außerdem eine Milchleitung 18 angeschlossen, die sich von den Zitzenbechern 17 bis zu einem Milchtank 19 erstreckt. Ein zweiter Abschnitt der Saugleitung 15 erstreckt sich von dem Pumpensystem 14 bis zu einem oberen Abschnitt des Milchtanks 19. In die Saugleitung 15 mündet ein Spülanschluss 21, der mit einem schaltbaren Ventil 22 versehen ist.

Im Melkbetrieb erzeugt das Pumpensystem 14 einen Unterdruck, der über die Saugleitung 15 an die Zitzenbecher 17 und an den Milchtank 19 angelegt wird. Durch einen Pulsator 23 in der Saugleitung 15 pulsiert der an die Zitzenbecher 17 angelegte Unterdruck, sodass in die Zitzenbecher 17 eingeführte Zitzen einer Kuh dazu angeregt werden, Milch abzugeben. Die Milch wird durch die Milchleitung 18 in den Milchtank 19 geleitet, in dem im Wesentlichen derselbe Unterdruck anliegt wie an den Zitzenbechern 17.

In regelmäßigen Abständen wird der Melkbetrieb unterbrochen, um die Melkanlage spülen zu können (Spülbetrieb).

Dazu wird das Pumpensystem 14 außer Betrieb gesetzt und das Ventil 22 des Spülanschlusses 21 geöffnet. Im Spülbetrieb wird durch den Spülanschluss 21 eine Abfolge mehrerer Spülflüssigkeiten in die Melkanlage eingeleitet, darunter Spülflüssigkeiten mit alkalischen Bestandteilen und Spülflüssigkeiten mit sauren Bestandteilen. Zum Abschluss wird die Melkanlage mit reinem Wasser gespült.

Die Spülflüssigkeit gelangt durch die Saugleitung 15 in den Milchtank 19 und von dort durch die Milchleitung 18 zu den Zitzenbechern 17. Die Zitzenbecher 17 sind im Spülbetrieb verschlossen, sodass die Spülflüssigkeit dort nicht austreten kann, sondern wieder in die Saugleitung 15 übergeht. Von der Saugleitung 15 wird die Spülflüssigkeit über den Pulsator 23 in Richtung Pumpensystem 14 geleitet. Die Melkanlage ist so eingerichtet, dass alle Komponenten der Melkanlage und insbesondere die kompletten Abschnitte der Saugleitung und 15 und der Milchleitung 18 gründlich gespült werden.

Bei der alternativen Ausführungsform der Fig. 2 wird im Spülbetrieb ein Adapter 24 des Spülanschlusses 21 in die Zitzenbecher 17 eingeführt. Die Spülflüssigkeit durch die Saugleitung und 15, die Milchleitung 18 und den Milchtank 19 in Richtung Pumpensystem 14 geführt.

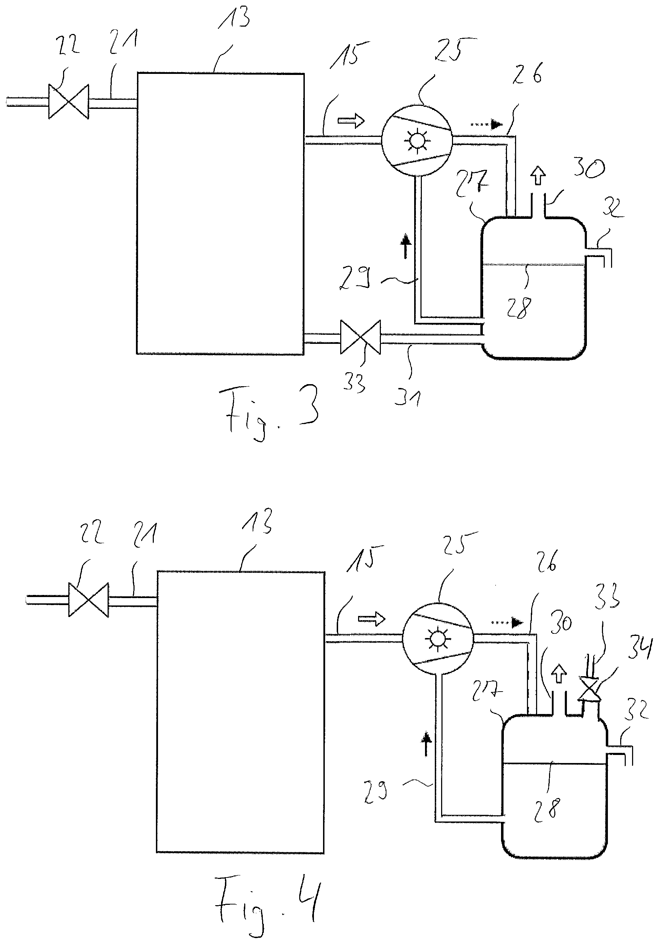

Der Aufbau des Pumpensystems 14 wird anhand von Fig. 3 näher erläutert. Die Saugleitung 15 der in Fig. 3 nur schematisch dargestellten Melkanlage 13 ist an einen Saugabschnitt einer Flüssigkeitsring-Vakuumpumpe 25 angeschlossen. Eine Auslassleitung 26 der Flüssigkeitsring-Vakuumpumpe 25 mündet in einen Pufferbehälter 27, der bis zu einem vorgegebenen Niveau mit Betriebsflüssigkeit gefüllt ist. Wenn die Flüssigkeitsring-Vakuumpumpe 25 in Betrieb ist, saugt sie über eine Betriebsflüssigkeitsleitung 29 Betriebsflüssigkeit aus dem Pufferbehälter 27 an. Die Betriebsflüssigkeit tritt in die Arbeitskammer der Flüssigkeitsring-Vakuumpumpe 25 ein und vermischt sich dort mit dem Flüssigkeitsring. Der Überschuss an Betriebsflüssigkeit wird über die Auslassleitung 26 abgegeben und zu dem Pufferbehälter 27 zurückgeführt. Die Betriebsflüssigkeit nimmt Betriebswärme der Flüssigkeitsring-Vakuumpumpe 25 auf, sodass die Betriebsflüssigkeit in dem Pufferbehälter 27 sich kontinuierlich erwärmt. Ist der Siedepunkt der Betriebsflüssigkeit erreicht, beginnt diese zu verdampfen und der Dampf kann durch einen Dampfauslass 30 austreten. Das aus der Melkanlage angesaugte Gas gelangt ebenfalls über die Auslassleitung 26 in den Pufferbehälter 27 und wird über den Dampfauslass 30 abgegeben. Auf diese Weise wird sichergestellt, dass die Betriebstemperatur der Flüssigkeitsring-Vakuumpumpe durch die Siedetemperatur der Betriebsflüssigkeit begrenzt ist.

Im Spülbetrieb wird die Flüssigkeitsring-Vakuumpumpe 25 außer Betrieb gesetzt. Die durch die Melkanlage zugeführte Betriebsflüssigkeit wird von der Saugleitung in eine Spülleitung 31 umgeleitet und gelangt in den Pufferbehälter 27. Dort steigt der Pegel bis zu einem Überlauf 32 an. Überschüssige Mengen an Flüssigkeit verlassen den Pufferbehälter 27 durch den Überlauf 32. Im letzten Schritt des Spülvorgangs wird die Melkanlage 13 mit reinem Wasser gespült, sodass eventuell zuvor in den Pufferbehälter 27 gelangte aggressive Bestandteile der Spülflüssigkeit ausreichend verdünnt werden. Die Flüssigkeitsring-Vakuumpumpe 25 nimmt keinen Schaden, wenn nachfolgend wieder Betriebsflüssigkeit aus dem Pufferbehälter 27 in die Flüssigkeitsring-Vakuumpumpe 25 geleitet wird. Dies gilt auch dann, wenn die Pumpe 25 Komponenten aus einem nicht-korrosionsbeständigen Material umfasst

Nach Abschluss des Spülvorgangs wird das Ventil 33 in der Kühlleitung 31 wieder geschlossen. Der Melkbetrieb kann wieder beginnen.

In der alternativen Ausführungsform der Fig. 4 wird die Spülflüssigkeit durch die Flüssigkeitsring-Vakuumpumpe 25 hindurch in den Pufferbehälter 27 geleitet. Dabei nimmt die Spülflüssigkeit sowohl den Weg über die Auslassleitung 26 als auch den Weg über die Betriebsflüssigkeitsleitung 29. Die Pumpe besteht aus Edelstahl, so dass sie durch die aggressiven Bestandteile der Spülflüssigkeit keinen Schaden nimmt.

Der Pufferbehälter 27 ist ferner an einen Frischwasseranschluss 33 angeschlossen. Der Frischwasseranschluss 33 wird über ein Schwimmerventil 34 gesteuert, sodass der Pufferbehälter 27 aufgefüllt wird, wenn der Flüssigkeitsstand unter einen vorgegebenen Pegel absinkt.

## Patentansprüche

1. Melkanlage mit einem Milchtank (19), mit einem an den Milchtank (19) angeschlossenen Zitzenbecher (17), mit einem Spülanschluss (21) zum Einleiten einer Spülflüssigkeit in die Melkanlage und mit einer Flüssigkeitsring-Vakuumpumpe (25) zum Anlegen eines Unterdrucks an den Zitzenbecher (17), wobei ein Pufferbehälter (27) für eine Betriebsflüssigkeit der Flüssigkeitsring-Vakuumpumpe (25) vorgesehen ist, **dadurch gekennzeichnet, dass** sich ein Spülkanal (15, 18, 31) von dem Spülanschluss (21) bis zu dem Pufferbehälter (27) erstreckt.

2. Melkanlage nach Anspruch 1, **gekennzeichnet durch** eine Betriebsflüssigkeitsleitung (29), die sich von dem Pufferbehälter (27) bis zu der Flüssigkeitsring-Vakuumpumpe (25) erstreckt.

3. Melkanlage nach Anspruch 1 oder 2, **gekennzeichnet durch** eine Auslassleitung (26), die sich von einer Ausgangsseite der Flüssigkeitsring-Vakuumpumpe (25) bis zu dem Pufferbehälter (27) erstreckt.

4. Melkanlage nach einem der Ansprüche 1 bis 3, **dadurch gekennzeichnet, dass** der Pufferbehälter (27) einen Dampfauslass (30) umfasst.

5. Melkanlage nach einem der Ansprüche 1 bis 4, **dadurch gekennzeichnet, dass** der Pufferbehälter (27) als Abscheider für mit der Flüssigkeitsring-Vakuumpumpe (25) geförderte Flüssigkeiten ausgebildet ist.

6. Melkanlage nach einem der Ansprüche 1 bis 5, **gekennzeichnet durch** eine oder mehrere Melkstationen (16), die jeweils eine Mehrzahl von Zitzenbechern (17) aufweisen.

7. Melkanlage nach einem der Ansprüche 1 bis 6, dass an den Zitzenbecher (17) eine Milchleitung (18) und eine Saugleitung (15) angeschlossen sind, wobei die Saugleitung (15) sich zu der Flüssigkeitsring-Vakuumpumpe (25) erstreckt und wobei die Milchleitung (18) sich zu dem Milchtank (19) erstreckt.

8. Melkanlage nach einem der Ansprüche 1 bis 7, **dadurch gekennzeichnet, dass** eine Saugleitung (15) sich zwischen dem Milchtank (19) und der Flüssigkeitsring-Vakuumpumpe (25) erstreckt.

9. Melkanlage nach Anspruch 7 oder 8, **dadurch gekennzeichnet, dass** ein Abschnitt des Spülkanals sich durch eine Milchleitung (18) und/oder durch eine Saugleitung (15) erstreckt.

10. Melkanlage nach einem der Ansprüche 1 bis 9, **dadurch gekennzeichnet, dass** der Spülkanal (15, 26, 29) sich durch die Flüssigkeitsring-Vakuumpumpe (25) hindurch erstreckt.

11. Melkanlage nach einem der Ansprüche 1 bis 10, **dadurch gekennzeichnet, dass** der Spülkanal (31) an der Flüssigkeitsring-Vakuumpumpe (25) vorbei geführt ist.

12. Melkanlage nach einem der Ansprüche 1 bis 11, **dadurch gekennzeichnet, dass** der Pufferbehälter (27) einen Anschluss (33) an einen Flüssigkeitsvorrat aufweist, wobei der Anschluss durch ein Schwimmerventil (34) gesteuert ist.

13. Melkanlage nach einem der Ansprüche 1 bis 12, **gekennzeichnet durch** eine Steuerung, die dazu ausgelegt ist, in einem Melkbetrieb die Flüssigkeitsring-Vakuumpumpe (25) in Betrieb zu setzen sowie den Spülanschluss (21) zu schließen, und die dazu ausgelegt ist, in einem Spülbetrieb die Flüssigkeitsring-Vakuumpumpe (25) außer Betrieb zu setzen sowie den Spülanschluss (21) zu öffnen.

14. Melkverfahren, bei dem in einem Melkbetrieb mit einer Flüssigkeitsring-Vakuumpumpe (25) ein Unterdruck an einen Zitzenbecher (17) angelegt wird, um Milch in einen Milchtank (19) zu leiten, wobei der Flüssigkeitsring-Vakuumpumpe (25) eine Betriebsflüssigkeit aus einem Pufferbehälter (27) zugeführt wird, und bei dem in einem Spülbetrieb eine Spülflüssigkeit in die Melkanlage eingeleitet wird, um den Zitzenbecher (17) zu spülen, wobei die Spülflüssigkeit durch einen Spülkanal (15, 18, 31) in den Pufferbehälter (27) geleitet wird.

## Claims

1. Milking system with a milk tank (19), with a teat cup (17) which is connected to the milk tank (19), with a rinsing connection (21) for introducing a rinsing liquid into the milking system, and with a liquid ring vacuum pump (25) for applying a negative pressure to the teat cup (17), wherein a buffer container (27) is provided for an operating liquid of the liquid ring vacuum pump (25), **characterized in that** a rinsing channel (15, 18, 31) extends from the rinsing connection (21) as far as the buffer container (27).

2. Milking system according to Claim 1, **characterized by** an operating liquid line (29) which extends from the buffer container (27) as far as the liquid ring vacuum pump (25).

3. Milking system according to Claim 1 or 2, **characterized by** an outlet line (26) which extends from an outlet side of the liquid ring vacuum pump (25) as far as the buffer container (27).

4. Milking system according to one of Claims 1 to 3, **characterized in that** the buffer container (27) comprises a vapour outlet (30).

5. Milking system according to one of Claims 1 to 4, **characterized in that** the buffer container (27) is designed as a separator for liquids conveyed with the liquid ring vacuum pump (25).

6. Milking system according to one of Claims 1 to 5, **characterized by** one or more milking stations (16) which each have a plurality of teat cups (17).

7. Milking system according to one of Claims 1 to 6, in that a milk line (18) and a suction line (15) are connected to the teat cup (17), wherein the suction line (15) extends to the liquid ring vacuum pump (25), and wherein the milk line (18) extends to the milk tank (19).

8. Milking system according to one of Claims 1 to 7, **characterized in that** a suction line (15) extends between the milk tank (19) and the liquid ring vacuum pump (25).

9. Milking system according to Claim 7 or 8, **characterized in that** a portion of the rinsing channel extends through a milk line (18) and/or through a suction line (15).

10. Milking system according to one of Claims 1 to 9, **characterized in that** the rinsing channel (15, 26, 29) extends through the liquid ring vacuum pump (25).

11. Milking system according to one of Claims 1 to 10, **characterized in that** the rinsing channel (31) is guided past the liquid ring vacuum pump (25).

12. Milking system according to one of Claims 1 to 11, **characterized in that** the buffer container (27) has a connection (33) to a liquid store, wherein the connection is controlled by a float valve (34).

13. Milking system according to one of Claims 1 to 12, **characterized by** a controller which is configured to start up the liquid ring vacuum pump (25) and also to close the rinsing connection (21) in a milking mode, and which is configured to stop the liquid ring vacuum pump (25) and also to open the rinsing connection (21) in a rinsing mode.

14. Milking method, in which in a milking mode, a negative pressure is applied to a teat cup (17) with a liquid ring vacuum pump (25) in order to conduct milk into a milk tank (19), wherein an operating liquid is supplied to the liquid ring vacuum pump (25) from a buffer container (27), and in which, in a rinsing mode, a rinsing liquid is introduced into the milking system in order to rinse the teat cup (17), wherein the rinsing liquid is conducted through a rinsing channel (15, 18, 31) into the buffer container (27).

## Revendications

1. Installation de traite comprenant un réservoir de lait (19), un gobelet trayeur (17) raccordé au réservoir de lait (19), un raccord de rinçage (21) pour introduire un liquide de rinçage dans l'installation de traite et une pompe à vide à anneau de liquide (25) pour l'application d'une dépression au gobelet trayeur (17), un réservoir tampon (27) pour un liquide de fonctionnement de la pompe à vide à anneau de liquide (25) étant prévu, **caractérisée en ce**
**qu'**un canal de rinçage (15, 18, 31) s'étend depuis le raccord de rinçage (21) jusqu'au réservoir tampon (27).

2. Installation de traite selon la revendication 1, **caractérisée par** une conduite de liquide de fonctionnement (29) qui s'étend depuis le réservoir tampon (27) jusqu'à la pompe à vide à anneau de liquide (25).

3. Installation de traite selon la revendication 1 ou 2, **caractérisée par** une conduite de sortie (26) qui s'étend depuis un côté de sortie de la pompe à vide à anneau de liquide (25) jusqu'au réservoir tampon (27).

4. Installation de traite selon l'une quelconque des revendications 1 à 3, **caractérisée en ce que** le réservoir tampon (27) comprend une sortie de vapeur (30).

5. Installation de traite selon l'une quelconque des revendications 1 à 4, **caractérisée en ce que** le réservoir tampon (27) est réalisé sous forme de séparateur pour les liquides refoulés avec la pompe à vide à anneau de liquide (25).

6. Installation de traite selon l'une quelconque des revendications 1 à 5, **caractérisée par** un ou plusieurs postes de traite (16) qui présentent chacun une pluralité de gobelets trayeurs (17).

7. Installation de traite selon l'une quelconque des revendications 1 à 6, qu'une conduite de lait (18) et une conduite d'aspiration (15) sont raccordées au gobelet trayeur (17), la conduite d'aspiration (15) s'étendant jusqu'à la pompe à vide à anneau de liquide (25) et la conduite de lait (18) s'étendant jusqu'au réservoir de lait (19).

8. Installation de traite selon l'une quelconque des revendications 1 à 7, **caractérisée en ce qu'**une conduite d'aspiration (15) s'étend entre le réservoir de lait (19) et la pompe à vide à anneau de liquide (25).

9. Installation de traite selon la revendication 7 ou 8, **caractérisée en ce qu'**une portion du canal de rinçage s'étend à travers une conduite de lait (18) et/ou à travers une conduite d'aspiration (15).

10. Installation de traite selon l'une quelconque des revendications 1 à 9, **caractérisée en ce que** le canal de rinçage (15, 26, 29) s'étend à travers la pompe à vide à anneau de liquide (25).

11. Installation de traite selon l'une quelconque des revendications 1 à 10, **caractérisée en ce que** le canal de rinçage (31) est guidé devant la pompe à vide à anneau de liquide (25).

12. Installation de traite selon l'une quelconque des revendications 1 à 11, **caractérisée en ce que** le réservoir tampon (27) présente un raccord (33) à une réserve de liquide, le raccord étant commandé par une soupape à flotteur (34).

13. Installation de traite selon l'une quelconque des revendications 1 à 12, **caractérisée par** une commande qui, dans un mode de traite, est conçue pour mettre en fonctionnement la pompe à vide à anneau de liquide (25) et pour fermer le raccord de rinçage (21), et qui, dans un mode de rinçage, est conçue pour mettre hors service la pompe à vide à anneau de liquide (25) et pour ouvrir le raccord le raccord de rinçage (21).

14. Procédé de traite dans lequel, dans un mode de traite, une dépression est appliquée à un gobelet trayeur (17) avec une pompe à vide à anneau de liquide (25), afin de conduire du lait dans un réservoir de lait (19), un liquide de fonctionnement provenant d'un réservoir tampon (27) étant acheminé à la pompe à vide à anneau de liquide (25), et dans lequel, dans un mode de rinçage, un liquide de rinçage est introduit dans l'installation de traite afin de rincer le gobelet trayeur (17), le liquide de rinçage étant guidé à travers un canal de rinçage (15, 18, 31) dans le réservoir tampon (27).
